# EUROPÄISCHE PATENTSCHRIFT

(11) **EP 0 392 444 B1**
(45) Veröffentlichungstag und Bekanntmachung des Hinweises auf die Patenterteilung: **02.03.1994**
(21) Anmeldenummer: 90106823.9
(22) Anmeldetag: 10.04.1990
(51) Int. Cl.: A01K 1/015, C09K 3/32

(54) **Tierstreu**
Animal litter
Litière pour animaux

(30) Priorität: 10.04.1989 DE 3911678
(43) Veröffentlichungstag der Anmeldung: 17.10.1990
(73) Patentinhaber: ORGAN-FASER TECHNOLOGY COMPANY N.V., Curaçao (AN)
(72) Erfinder: Krähenbühl, Mirjam, CH-4353 Leibstadt (CH)
(74) Vertreter: Körber, Wolfhart, Dr.rer.nat.

(56) Entgegenhaltungen:
- EP-A- 0 111 467
- WO-A-83/03255
- WO-A-86/00496
- DE-A- 3 644 826
- DE-C- 2 725 687
- FR-A- 2 606 668
- US-A- 4 341 180
- US-A- 4 409 925
- US-A- 4 676 196
- US-A- 4 721 059
- US-A- 4 723 509

## Beschreibung

Die Erfindung betrifft eine Tierstreu mit hoher Geruchsbindung, hoher Saugfähigkeit und einem geringen Schüttgewicht besteht aus einem aus flüssigkeitsaufnehmenden organischen Füllstoffen und mit Flüssigkeit reagierenden anorganischen Zuschlagstoffen und geringer Feuchtigkeit gebildeten Granulat.

Ein solches absorbierendes Material welches auch als Tierstreu benutzbar ist, ist in der US-A-4409925 beschrieben. Das Granulat besteht aus im wesentlichen kugelförmigen Körnern.

Speziell in dichtbesiedelten, städtischen und halbstädtischen Gebieten werden seit Jahren zur Reinhaltung von Haustieren körnige Trocken- bzw. Absorptionsmittel verwendet. Im wesentlichen werden solche Produkte im größeren Ausmaß von Kleintier-, insbesondere von Katzenhaltern gekauft und angewandt.

Unter der Bezeichnung Katzenstreu werden heutzutage verschiedene Produkte mit sehr unterschiedlichen Eigenschaften auf dem Markt angeboten. Die meisten dieser angebotenen Produkte sind auf mineralischer Basis hergestellt.

Aus der DE-PS 31 21 403 ist beispielsweise eine derartige Tierstreu bekannt, zu deren Herstellung poröses anorganisches Material mit einer Porenstruktur eingesetzt wird. Das dort verwandte poröse Material besteht aus Calciumsilikatgranulat und/oder Calciumsilikatpulver, welches einen pH-Wert zwischen etwa 5,8 und 6,2 auffweist. Die bekannte, aus Calciumsilikatgranulat mit einem Porenradius von weniger als 500 nm hergestellte Tierstreu ist form- und konsistenzbeständig und wirkt bakterizid. Bei längerem Gebrau derartiger Materialien stellt sich jedoch eine ungünstige Geruchsentwicklung ein, so daß die Tierstreu häufig gewechselt werden muß, obwohl die Absorptioneigenschaften kaum ausgeschöpft worden sind.

Die oben genannten Tierstreuprodukte mit ihren unterschiedlichen Charakteristiken weisen jedoch weitere Nachteile auf. Ihr hohes spezifisches Gewicht bewirkt eine große Unhandlichkeit beim Beschaffen und Transportieren der abgefüllten Produkte. Einiger der Tierstreupräparate bestehen aus scharfkantigen, speziell gebrochenen Steinen, die bewirken, daß die Pfotentiere die spitzen Körner meiden.

DE-OS 36 44 826 beschreibt eine Tierstreu, die aus einer Mischung aus Füllstoffen, Gips und Beschleunigern besteht, wobei die Materialien trocken vermischt und unter hohem Druck verpresst werden. Das Formungsverfahren mittels pressen durch Matizen weist jedoch viele Nachteile auf, z.B. ein hoher Energieverbrauch, ein hoher Verschleiß und eine hohe Produktdichte.

Bezogen auf das Produktgewicht ist die Flüssigkeitsaufnahme bei vielen bekannten Produkten sehr gering. Nach Erreichen der Saugkapazität dieser Produkte neigen diese zum Quellen und damit zum Verklumpen. Noch ausgeprägter ist dies bei Kieselgur, welches stark klebrig, schmierig und sogar breiig wird. Diese nachteiligen Eigenschaften führen zwangsläufig zu Schwierigkeiten bei der Handhabung der Produkte. Durch diese Produktcharakteristiken wird ebenfalls ein kurzfristiger Wechsel der Streu und demzufolge ein größerer Verbrauch bewirkt.

Bei der Herstellung dieser Tierstreumaterialien entsteht durch die Zerkleinerungsart und in den Gebinden durch Abrieb beim Lagern, Transportieren und Handhaben zwischen Hersteller und Verbraucher ein hoher Anteil Feinstaub. Dieser bewirkt bei der Handhabung der offenen Gebinde beim Tierhalter hohe Staubemissionen, spezielle beim Wechseln des Streugutes in den Boxen. Hinzu kommt, daß dieser hohe Feinstaubanteil nachteilig für die Tiere ist, die beim Scharren in solchen Produkten den Staub inhalieren. Auch das körnige Granulat nach der eingangs genannten US-A-4409925 haben den genannten Nachteil, da sie allein durch teilweises Abbinden der anorganischen Füllstoffe durch geringe Zugabe von Wasser hergestellt werden. Die organischen Füllstoffe und nichtabgebundenen anorganischen Zuschlagsstoffe liegen als Staubanteil vor.

Der Erfindung liegt die Aufgabe zugrunde unter Behebung der Nachteile des genannten Standes der Technik ein Tierstreu zu schaffen, das bei hoher Geruchsbindung und hoher Saugfähigkeit sowie geringem Schüttgewicht sowohl für Mensch als auch Tier die optimalen Bedingungen bezüglich Staubfreiheit, Qualität und Wirtschaftlichkeit erfüllt.

Diese Aufgabe wird erfindungsgemäß durch eine Tierstreu nach dem Patentanspruch 1 gelöst. In den Unteransprüchen sind zweckmäßige Ausgestaltungen gekennzeichnet.

Die erfindungsgemäße Tierstreu weist folgende Spezifikationen auf. Die Granulatkörner besitzen eine stabile poröse Oberfläche aus im wesentlichen abgebundenem Zuschlagstoff und eine weiche und saugfähige Kernpartie aus Füllstoffen und im wesentlichen nicht abgebundenen Zuschlagstoffen. Das Granulat hat zwechmäßig eine ausgewählte Teilchengröße im Bereich von 1 bis 10 mm Durchmesser und ist in Kugelform. Vorteilhafterweise sind im fertigen Tierstreuprodukt alle Kugelgrößen miteinander vermischt. Vorzugsweise ist jedoch in diesem Produkt ein Teilchengrößenbereich von 2 bis 5 mm Durchmesser der Teilchen vorhanden. Das Granulat weist weiterhin ein Schüttgewicht im Bereich von 200 bis 700 kg/m³, vorteilhafterweise im Bereich von 300 bis 500 kg/m³, auf. Die Farbe des erfindungsgemäßen Tierstreuproduktes ist gräulich bis bräunlich, wobei diese weitgehend dem Kundenwunsch angepaßt werden kann.

Erstmalig kann somit eine Tierstreu zur Verfügung gestellt werden, die aus einem Granulat auf Basis von Papierschlamm und/oder organischen Fasern, aufbereitet aus Abfallstoffen und Zuschlagstoffen, besteht. Dabei konnte eine von aus Haushalts-, Gewerbe- und dgl. Abfällen gewonnen, vorzerkleinerte Faser- und/oder Granulatfraktion zum Einsatz kommen, wobei diese gemäß der DE-PS 31 05 597 hergestellt werden kann. Durch die Wiederverwertung von anfallendem Schlamm aus der Papier-, Zellstoffindustrie und /oder Nassfaseranlagen kann ein Granulat hergestellt werden, alle Substanzen (Feststoffe und Flüssigkeiten) verwertet oder genutzt werden können. Durch die Verwendung des Papierschlamms kann die Umwelt weiter entlastet werden, denn bisher mußte dieser Abfall deponiert und vernichtet werden.

Die erfindungsgemäße Tierstreu findet insbesondere Verwendung zur Einstreu von Katzen.

Gegenüber bekannten Tierstreuprodukten weist das erfindungsgemäß hergestellte Produkt folgende Vorteile auf. Die neue erfindungsgemäße Steu ist sehr handlich, da sie ein geringes Schüttgewicht im Vergleich zu bekannten Einstreuprodukten aufweist. Ebenso zeigt das erfindungsgemäße Produkt keinen Anteil an Feinstaub und ist Abriebsfrei, wie sich aus der Bestimmung des Abriebs (modifizierter SHELL-Index) ergibt. Aufgrund seiner hohen Absorptionsfähigkeit braucht die erfindungsgemäße Streu nicht kurzfristig gewechselt zu werden und vermindert demzufolge einen größeren Verbrauch, so daß eine längere Haltbarkeit bzw. Benützungsdauer gewährleistet werden kann. Das erfindungsgemäße Produkt kann vorteilhaft mit dem Abwassser bzw. durch die Hauskompostierung entsorgt werden.

Zusammenfassend bringt die erfindungsgemäß hergestellte Tierstreu gegenüber den bekannten Tierstreuprodukten den großen Vorteil mit sich, daß bei überlegenem Ab- bzw. Adsorptionsvermögen (hohe Saugfähigkeit) der erfindungsgemäß hergestellten Granulate auf der Grundlage von Papierschlamm und/oder organischen Fasern, aufbereitet aus Abfällen und Altstoffen mit einem Gehalt an diversen Zuschlagsstoffen, wie Kalk, Kalkhydrat, Gips und ähnlichen Stoffen, sowie eine gewisse Restfeuchte, diese auch noch, wie bereits erwähnt, nicht nur form- und konsistenzbeständig, sondern auch geruchsbindend, bakterizid und leicht zu entsorgen sind.

Die Erfindung wird nun anhand der folgenden Beispiele in Verbindung mit den beiliegenden Zeichnungen näher erläutert.

Es zeigt:
Figur 1 ein Fließschema zur Herstellung einer Tierstreu auf der Grundlage von organischen Fasern, aufbereitet aus Abfällen und Altstoffen.
Figur 2 ein Fließschema unter Verwendung von Papierschlamm.

### Beipiel 1

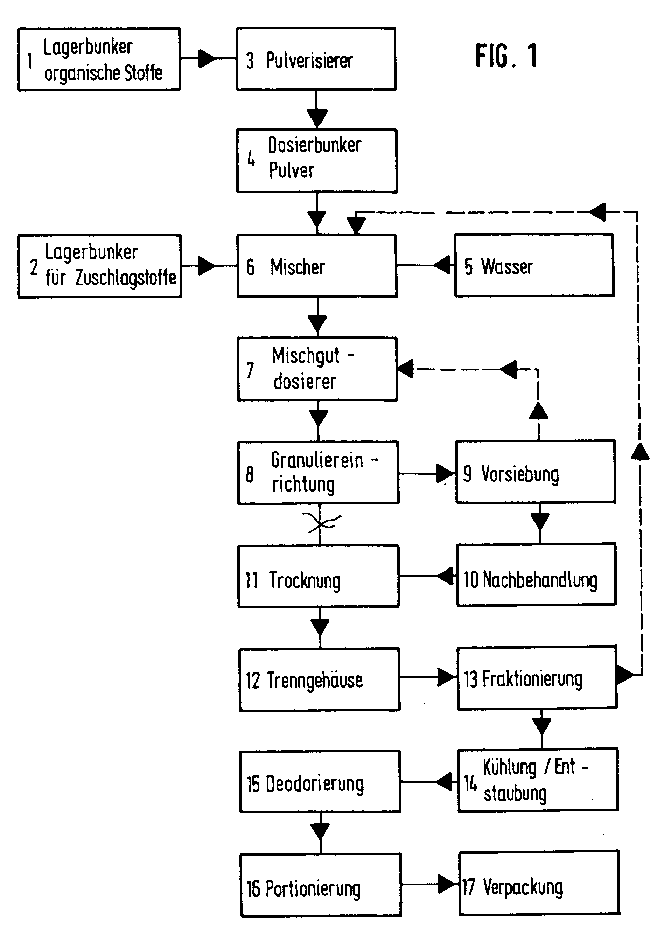

Ein Verfahren zur Herstellung der neuen Tierstreu auf Basis von vorzerkleinerten organischen Fasern, aufbereitet aus Abfallstoffen, erfolgte unter Bezugnahme auf die Figur 1 wie folgt:

Es wurden folgende Ausgangsstoffe verwendet:
ca. 60 Gew.%te organische Fasern, aufbereitet aus Abfällen und Altstoffen (gemäß der DE-PS 31 05 597)
ca. 32 Gew.%te Kalk oder Kalkhydrat oder Gips
ca. 8 Gew.%te Wasser.

In einem Lagerbunker 1 befinden sich die aus gemischten Haus-, Gewerbe- und anderen dgl. Abfällen aufbereiteten organischen Fasern, die gemäß DE-PS 31 05 597 hergestellt sein können. Aus diesem Bunker 1 werden die vorzerkleinerten organischen Abfallstoffe dosiert abgezogen und in einen Pulverisierer 3 geleitet.

Position 3 puverisiert diese Stoffe nun in Staubform und eine nicht dargestellte Pneumatik transportiert das so hergestellte Pulver in einem Dosierbunker 4.

Diese Position 4 übergibt nun das Pulver an einen Mischer 6. Aus einem Lagerbunker 2 werden nun die Zusschlagsstoffe (Kalk, Kalkhydrat, Gips oder ähnliche Stoffe) nach speziellem Rezept und Reihenfolge dosiert, abgezogen und ebenfalls dem Mischer 6 zugeführt.

Aus einer Vorrichtung 5 wird nun dosiert Wasser in den Mischer geleitet. Dieser Mischer (Position 6) kann ein bekannter diskontinuierlicher Chargenmischer sein, wobei dieser die Aufgabe hat, nach speziellem Programm die Komponenten zu mischen. Eine nicht dargestellte Fördereinrichtung leitet das fertige Mischgut in einen Mischgutdosierer 7. Dieser Mischgutdosierer 7 hat die Aufgaben:
a) Mischgutbunkerung und
b) Mischgutdosierung.

Eine nicht dargestellte mechanische Fördereinrichtung transportiert nun das von dem Mischgutdosierer 7 dosierte Mischgut an eine Granuliereinrichtung 8. Die Granuliereinrichtung 8, die in einer erfindungsgemäßen Ausführungsform aus einer rotierenden Trommel besteht, hat die Aufgabe, das Mischgut in Kugeln zu formen. Dabei sind Drehzahl, Neigung und Aufenthaltszeit des Mischguts mitbestimmend für seine Formgebung. Die Granuliereinrichtung kann ebenfalls aus einem Teller oder einer Schnecke bestehen.

Aus Position 8 (Granuliereinrichtung) werden die erhaltenen Granulatkörner direkt zu einer Vorsiebung 9 geleitet. Diese Vorsiebung 9 trennt die übergroßen Granulate von den maximalen Endgrößen (10 mm Durchmesser). Eine nicht dargestellte Fördereinrichtung führt die Übergrößen in die Mischgutdosierung 7 zurück.

Die Granulatkörner werden nun über eine nicht dargestellte Fördereinrichtung einer Nachbehandlung 10 Zugeführt.

Die Nachbehandlung (Position 10) hat die Aufgabe, die Granulate mit einem Mineralpulver zu bestäuben. Eine nicht dargestellte Fördereinrichtung transportiert die bestäubten Granulate dann zu einer Trocknung 11. Diese Trocknung 11 besteht aus einer rotierenden Trommel mit einer vorgeschalteten nicht dargestellten Heizeinrichtung. Position 11 hat die Aufgabe bei ständigem Bewegen und Rollen, die Formlinge bei einer bestimmten Temperatur von ca. 40 bis 70 % Wassergehalt auf einen maximalen Wassergehalt von 8 Gew.% abzutrocknen, ohne daß die Granulate beschädigt oder deformiert werden. Am Ende dieses Trocknungsganges entstehen harte Granulate, die direkt einem Trenngehäuse 12 übergeben werden.

Das Trenngehäuse (Position 12) besteht aus einer Beruhigungskammer und einem Granualataustrag und trennt die Granulate von beim Trocknen entstandenen Dampf-Luftgemisch.

Die Granulate werden dann von einer nicht dargestellten Fordereinrichtung beim Austrag des Trenngehäuses 12 übernommen und zu einer Fraktionierung 13 transportiert. Die Position 13 (Fraktionierung) trennt das Granulat in zwei Korngrößen. Das Feinkorn, vorteilhafterweise unter 1 mm Durchmesser, wird im erfindungsgemäßen Verfahren durch eine nicht dargestellte Fördereinrichtung dem Mischer 6 zur Wiederverwendung zugeführt.

Das erhaltene Produkt (Granulat) wird ebenfalls über eine nicht dargestllte Tranporteinheit einer Kühlung/Entstaubung 14 zugeführt.

Diese Position 14 (Kühlung/Entstaubung) mit eingebauten Ventilatoren, hat die Aufgabe, das noch heiße Produkt auf Raumtemperatur abzukühlen und gleichzeitig zu entstauben. Das gekühlte Produkt wird nun in eine Deodorierung 15 geleitet. Position 15 (Deodorierung) besteht aus einem schwingendem Behälter mit einer pneumatischen Eindüsung und hat die aufgabe, dem Produkt gleichmäßig die eingestellte Duftnote aufzusprühen.

Eine nicht dargestellte Tranporteinrichtung fördert das fertige Tierstreuprodukt zu einer Portionierung 16.

Diese Portionierung 16 teilt den Produktstrom in die eingestellten Handelsgrößen und übergibt diese direkt an eine Verpackung 17. Position 17 (Verpackung) übernimmt die Portionen, füllt sie in Säcke, die anschließend direkt verschlossen und in Container gestapelt werden.

### Beispiel 2

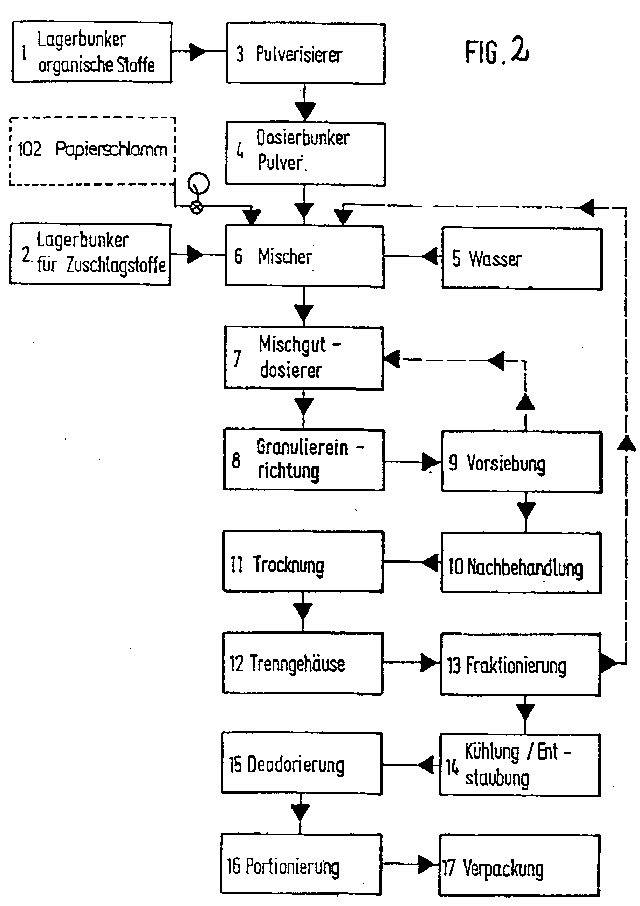

Ein Verfahren zur Herstellung der neuen Tierstreu auf Basis von Papierschlamm, erfolgte unter Bezugnahme auf die Figur 2.

Es wurden folgende Ausgangsstoffe verwendet:
ca. 54 Gew.% Papierschlamm
ca. 25 Gew.% organische Fasern
ca. 13 Gew.% Kalk, Kalkhydrat und/oder Gips
ca. 8 Gew.% Wasser
Der angelieferte Papierschlamm wird in den mit speziellen Einrichtungen ausgerüsteten Auffangbunker 102 gekippt. Eine eingebaute Meßeinrichtung bestimmt den Trockensubstanz- bzw. H₂O- Gehalt. Eine nicht dargestellte Dosiereinrichtung gibt die vom Rechengerät und vom Mischer 6 verlangte Menge Schlamm in die Förderschnecke, die den Schlamm zum Mischer tranportiert.

Nach dem Einfüllen des Schlamms wird das Mischgerät in Betrieb gesetzt und unter ständigem Rühren wird aus Position 5 Wasser zugeführt bis er in eine wäßrige, fließfähige Lösung umgewandelt ist.

In dieser Lösungsform ist die Masse misch- und verbindungsfähig. Anschließend werden, ebenfalls unter ständigem Rühren, Kalk und andere Zuschlagstoffe aus dem Bunker 2 zudosiert.

Wenn die Mischflotte durchgemischt und aufgelöst ist, werden aus dem Bunker 4 pulverisierte, organische Fasern unter ständigem Rühren in die Masse zudosiert, bis die Mischung ihre verlangte Feuchtigkeit erreicht hat. Die Mischung wird solange gerührt und geknetet, bis alle Stoffe aufgelöst und unter sich verbunden sind, so daß sie via Mischgutdosierer 7 zum Granulieren an Position 8 weitergeleitet werden können.

Ab dem Mischer 6 sind die weiteren Prozesschritte, wie in Beispiel 1 beschrieben.

Die durchschnittlichen Material-Parameterwerte der erfindungsgemäßen Tierstreugranulate waren wir folgt:

| | |
|---|---|
| Schüttgewicht | ca. 400 kg/m³ |
| Feuchtigkeits/Flü ssigkeitsaufnahmevermögen | zwischen 90 und 120 g Wasser/100 g Streu |
| Teilchengröße | im Bereich 2 bis 5 mm |
| Farbe | hellgrau |
| Wassergehalt | 7,7 % |
| Glühverlust | 56,1 % |
| Abrieb (modif. SHELL-Index) | 1,8 ‰ |

Die auf diese Weise hergestellten Produkte auf der Grundlage von Papierschlamm und/oder organischischen Fasern, aufbereitet aus Abfällen und Altstoffen, eignen sich vorteilhafterweise zur Verwendung als Tierstreu, insbesondere als ein Streu für Katzen. Wie oben dargelegt, ist das erfindungsgemäße Produkt hinsichtlich Schüttgewicht, Absorption für Feuchtigkeit/Flüssigkeit und Abriebsverhalten bekannten Handelsprodukten überlegen. Da auch bezüglich der Geruchsbindung und in den andern weiter oben erörterten Hinsichten das Produkt bekannten Handelsprodukten überlegen ist, eignet sich das erstere als überlegene Tierstreu, inbesondere als ein Streu für Katzen.

## Patentansprüche

1. Tierstreu mit hoher Geruchsbindung, hoher Saugfähigkeit und einem geringen Schüttgewicht bestehend aus einem aus flüssigkeitsaufnehmenden organischen Füllstoffen und mit Flüssigkeit reagierenden anorganischen Zuschlagstoffen und geringer Feuchtigkeit gebildetem Granulat aus im wesentlichen kugelförmigen Körnern,
**dadurch gekennzeichnet, daß**
die Granulatkörner
- eine stabile, poröse Oberfläche aus abgebundenem Zuschlagstoff haben
- und eine weiche und saugfähige Kernpartie einer Mischung aus Füllstoffen und im wesentlichen nicht abgebundenen Zuschlagstoffen besitzen,
- wobei die Füllstoffe aus einer pulverisierten Fraktion von aus Haushalts-, Gewerbe- und dgl. Abfällen gewonnenen Fasern bestehen.

2. Tierstreu nach Anspruch 1,
**dadurch gekennzeichnet,**
daß die genannten Füllstoffe aus einer Mischung der genannten pulverisierten Fasern und Papierschlamm bestehen.

3. Tierstreu nach Anspruch 1,
**dadurch gekennzeichnet,**
daß die Granulatkörner:
a) 55 bis 65 Gew. %, vorzugsweise etwa 60 Gew. %, organischen Fasern, aufbereitet aus Abfallstoffen,
b) 30 bis 34 Gew. %, vorzugsweise etwa 32 Gew. %, Zuschlagstoffen wie Kalk, Kalkhydrat, Gips und/oder ähnlichen Stoffen,
c) 6 bis 10 Gew. %, vorzugsweise etwa 8 Gew. %, Wasser besteht.

4. Tierstreu nach Anspruch 2,
**dadurch gekennzeichnet,**
daß die Granulatkörner aus:
a) 35 bis 75 Gew. %, vorzugsweise etwa 54 Gew. %, Schlamm aus Papier- und Zellstoffindustrie und/oder Naßfaseranlagen
b) 25 bis 35 Gew. %, vorzugsweise 25 Gew. %, organische Fasern aufbereitet aus Abfallstoffen
c) 10 bis 20 Gew. %, vorzugsweise etwa 13 Gew. %, Zuschlagstoffe, wie Kalk, Kalkhydrat, Gips und/oder ähnliche Stoffe
d) 6 bis 10 Gew. %, vorzugsweise etwa 8 Gew. %, Wasser besteht.

5. Tierstreu nach einem der vorhergehenden Ansprüche,
**dadurch gekennzeichnet,**
daß die etwa kugelförmigen Granulatkörner mit Mineralien bestäubt sind.

6. Tierstreu nach Anspruch 5,
**dadurch gekennzeichnet,**
daß die als Bestäubungsmittel verwendeten Mineralstoffe gleichzeitigals Deodorant wirken.

7. Tierstreu nach einem der vorhergehenden Ansprüche,
**dadurch gekennzeichnet,**
daß die Granulatkörner eine Teilchengröße im Bereich von 1 bis 10 mm, vorzugsweise im Bereich von 2 bis 5 mm, aufweisen.

8. Tierstreu nach einem der vorhergehenden Ansprüche,
**dadurch gekennzeichnet,**
daß das Granulat ein Schüttgewicht im Bereich von 200 bis 700 kg/m³, vorzugsweise im Bereich von 300 bis 500 kg/m³, aufweist, und daß das Feuchtigkeits-/Flüssigkeitsaufnahmevermögen zwischen 90 und 120 g Wasser/100 g Streu beträgt.

## Claims

1. Animal litter having a high level of deodorization, a high level of absorbency and low bulk density, consisting of a low-moisture granulate of substantially spherical grains formed by liquid-absorbing organic fillers and inorganic aggregates reacting with liquid, characterised in that the grains of the granulate
- have a stable, porous surface of bound aggregate,
- and have a soft and absorbent centre part consisting of a mixture of fillers and substantially non-bound aggregates,
- wherein the fillers consist of a pulverized fraction of fibres obtained from household, industrial, or similar refuse.

2. Animal litter according to claim 1, characterised in that the said fillers consist of a mixture of the said pulverized fibres and paper pulp.

3. Animal litter according to claim 1, characterised in that the grains of the granulate consist of:
(a) 55 to 65% by weight, preferably approximately 60% by weight, of organic fibres prepared from waste materials,
(b) 30 to 34% by weight, preferably approximately 32% by weight, of aggregates such as chalk, calcium hydroxide, gypsum and/or similar materials,
(c) 6 to 10% by weight, preferably approximately 8% by weight, of water.

4. Animal litter according to claim 2, characterised in that the grains of the granulate consist of:
(a) 35 to 75% by weight, preferably approximately 54% by weight, of pulp from the paper industry and the cellulose industry and/or wet fibre plants,
(b) 25 to 35% by weight, preferably 25% by weight, of organic fibres prepared from waste materials,
(c) 10 to 20% by weight, preferably approximately 13% by weight, of aggregates such as chalk, calcium hydroxide, gypsum and/or similar substances,
(d) 6 to 10% by weight, preferably approximately 8% by weight, of water.

5. Animal litter according to one of the preceding claims, characterised in that the approximately spherical grains of the granulate are dusted with minerals.

6. Animal litter according to claim 5, characterised in that the mineral substances used as a dusting agent act at the same time as a deodorant.

7. Animal litter according to one of the preceding claims, characterised in that the grains of the granulate have a particle size in the range from 1 to 10 mm, preferably in the range from 2 to 5 mm.

8. Animal litter according to one of the preceding claims, characterised in that the granulate has a bulk density in the range from 200 to 700 kg/m³, preferably in the range from 300 to 500 kg/m³, and in that the capacity for moisture/liquid absorption is between 90 and 120 g water/100 g litter.

## Revendications

1. Litière pour animaux à grand pouvoir de fixation des odeurs, à grand pouvoir absorbant et à faible densité apparente, consistant en un granulat formé de substances organiques de remplissage absorbant les liquides et d'additifs inorganiques réagissant avec les liquides, ce granulat ayant un faible taux d'humidité et étant en grains essentiellement sphériques,
**caractérisée** en ce que les grains de granulat ont une surface stable, poreuse, constituée d'additif ayant fait prise, et une partie de noyau tendre et absorbante faite d'un mélange de charges et d'additifs n'ayant essentiellement pas fait prise, les charges de remplissage étant constituées d'une fraction pulvérisée de fibres obtenues à partir de déchets de textiles ménagers et autres déchets.

2. Litière pour animaux selon la revendication 1, caractérisée en ce que lesdites charges de remplissage sont constituées d'un mélange desdites fibres pulvérisées et de boue de papeterie.

3. Litière pour animaux selon la revendication 1, caractérisée en ce que les grains de granulat sont composés de :
a) 55 à 65% en poids, de préférence environ 60% en poids, de fibres organiques préparées à partir de déchets,
b) 30 à 34% en poids, de préférence environ 32% en poids, d'additifs tels que chaux, chaux hydratée, plâtre et/ou substances similaires,
c) 6 à 10% en poids, de préférence environ 8% en poids, d'eau.

4. Litière pour animaux selon la revendication 2, caractérisée en ce que les grains de granulat sont composés de :
a) 35 à 75% en poids, de préférence environ 54% en poids, de boue de l'industrie du papier et de la cellulose et/ou d'installations de défibrage en phase humide,
b) 25 à 35% en poids, de préférence environ 25% en poids, de fibres organiques préparées à partir de déchets,
c) 10 à 20% en poids, de préférence environ 13% en poids, d'additifs tels que chaux, chaux hydratée, plâtre et/ou substances similaires,
d) 6 à 10% en poids, de préférence environ 8% en poids, d'eau.

5. Litière pour animaux selon une des revendications précédentes, caractérisée en ce que les grains de granulat sensiblement sphériques sont poudrés avec des minéraux.

6. Litière pour animaux selon la revendication 5, caractérisée en ce que les substances minérales utilisées comme agents de poudrage ont en même temps une action désodorisante.

7. Litière pour animaux selon une des revendications précédentes, caractérisée en ce que les grains de granulat présentent une granulométrie de l'ordre de 1 à 10 mm, de préférence de l'ordre de 2 à 5 mm.

8. Litière pour animaux selon une des revendications précédentes, caractérisée en ce que le granulat présente une densité apparente de l'ordre de 200 à 700 kg/m³, de préférence de l'ordre de 300 à 500 kg/m³ et en ce que son pouvoir d'absorption d'humidité et de liquides se situe entre 90 et 120 g d'eau par 100 g de litière.
